Europäisches Patentamt

(19) European Patent Office

Office européen des brevets

(11) Publication number: **0 047 954**
**B1**

(12) **EUROPEAN PATENT SPECIFICATION**

(45) Date of publication of patent specification: **27.12.84**

(21) Application number: **81107026.7**

(22) Date of filing: **07.09.81**

(51) Int. Cl.³: **F 16 F 9/34**

(54) **Vortex flow hydraulic shock absorber.**

(30) Priority: **12.09.80 JP 129926/80**
**12.09.80 JP 129925/80**

(43) Date of publication of application:
**24.03.82 Bulletin 82/12**

(45) Publication of the grant of the patent:
**27.12.84 Bulletin 84/52**

(84) Designated Contracting States:
**DE FR GB**

(56) References cited:
**DE-A-3 007 410**
**FR-A-1 068 219**
**GB-A-1 067 196**
**GB-A-2 065 268**
**US-A-3 220 517**
**US-A-3 672 474**
**US-A-4 082 169**

(73) Proprietor: **NISSAN MOTOR COMPANY,**
**LIMITED**
**No.2, Takara-cho, Kanagawa-ku**
**Yokohama-shi Kanagawa-ken 221 (JP)**

(72) Inventor: **Fukushima, Naoto**
**1-7-505, Nishikaigan 3-chome Tsujido**
**Fujisawa-shi Kanagawa-ken (JP)**
Inventor: **Iwata, Kazuroh**
**1136-331, Imaizumi**
**Kamakura-shi Kanagawa-ken (JP)**
Inventor: **Hidaka, Kunihiko**
**47-13, Sugita 8-chome Isogo-ku**
**Yokohama-shi Kanagawa-ken (JP)**
Inventor: **Yabuta, Keiichiro**
**1460-74, Kamigo-cho Totsuka-ku**
**Yokohama-shi Kanagawa-ken (JP)**

(74) Representative: **Patentanwälte TER MEER -**
**MÜLLER - STEINMEISTER**
**Triftstrasse 4**
**D-8000 München 22 (DE)**

## Description

The present invention relates generally to a hydraulic shock absorber for producing an absorbing force against a shock by vortex flow of a working fluid. More specifically, the invention relates to an improvement in and related to a construction of a vortex flow chamber in the shock absorber.

The vortex flow shock absorber has been known as to be applied to a vehicle suspension and so on. Such vortex flow shock absorber has a vortex chamber in which the working fluid flows in vortex fashion to produce the absorbing force against a shock. In the vortex flow shock absorber, the absorbing force produced in response to application of the shock depends on a resistance against the fluid flow produced by the vortex in the vortex chamber.

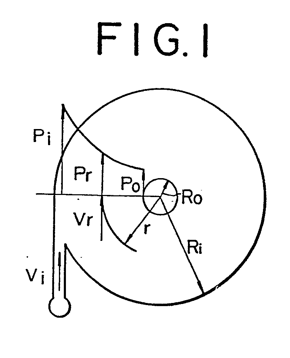

Here, assuming the vortex chamber is sized as shown in Fig. 1, the shock absorbing force related to the size of the vortex chamber can be described by the following equations. At first, note is to be given that since the working fluid used in such kind of hydraulic shock absorber has relatively low viscosity, of flow the fluid in the vortex chamber can be indicated as:

$$\rho \cdot Q \cdot V_r \cdot r = \text{const.}$$

where

$\rho$: density of the fluid,
$Q$: unit volume of the fluid, and
$V_r$: flow velocity of the fluid at a point $r$.

Here, since the density of the fluid P and unit volume of the fluid Q are constant, the above equation can be modified to:

$$V_r \cdot r = V_i \cdot R_i \qquad (1)$$

where
$V_i$: flow velocity of the fluid at the inlet to the vortex chamber, and
$R_i$: radius of the vortex chamber According to Bernoulli's theorem, the equation (1) can be modified as to:

$$P_r + 1/2 \cdot \rho \cdot V_r{}^2 = P_i + 1/2 \cdot \rho \cdot V_i^2 \qquad (2)$$

where
$P_r$: fluid pressure at the point r, and
$P_i$: fluid pressure at the inlet to the vortex chamber.

From the equation (1), the fluid velocity $V_r$ at the point r is represented by:

$$V_r = V_i \cdot \frac{R_i}{r}$$

Therefore, the equation (2) can be modified to:

$$P_r = P_i - \frac{1}{2} \rho\, V_r^2 + \frac{1}{2}\rho\, V_i^2$$

$$= P_i - \frac{1}{2}\rho\, V_i^2 \left\{ \left(\frac{R_1}{r}\right)^2 - 1 \right\} \qquad (3)$$

From the above equation (3), the fluid pressure $P_o$ at the outlet $P_o$ can be obtained from:

$$P_o = P_i - \frac{1}{2}\rho\, V_i^2 \left\{ \left(\frac{R_i}{R_o}\right)^2 - 1 \right\} \qquad (4)$$

As apparent from the foregoing, the fluid pressure $P_o$—$P_i$ is proportional to the radius $R_i^2$ of the vortex chamber. In other words, the drop of the fluid pressure is varied depending on the radius of the vortex chamber. Therefore, it can be understood that the absorbing force against the shock corresponds to the radius of the vortex chamber.

In the meanwhile, the shock absorber is required to be small sized for convenience in application to the vehicle. Reducing of the size of the shock absorber has been prevented by the limitation for the piston size to provide a sufficient absorbing force. This is caused by necessity of forming vortex passages for communication between the vortex chamber and the fluid chamber defined in the shock absorber. Therefore, it is necessary to take out the limitation to the piston in order to make the shock absorber compact enough.

Conventional examples of vortex flow shock absorbers are described in the DE—A—3 007 410 and in the US—A—3 220 517. In these prior art arrangements, the vortex passages are arranged in the circumferential wall of the piston and are so shaped that the fluid is tangentially introduced into the vortex chamber. Consequently, the thickness of the circumferential wall of the piston must be larger than the cross section of the vortex passages. Since the outer diameter of the piston is given by the dimensions of the cylinder, the necessary thickness of the circumferential wall implies a corresponding reduction of the diameter of the vortex chamber. On the other hand, if a certain diameter of the vortex chamber is required in order to provide enough shock absorbing force, the dimensions of the shock absorber cylinder must be enlarged.

It is an object of the present invention to provide a vortex flow shock absorber having a size satisfactorily reduced and providing enough absorbing force in spite of its compact size.

To accomplish the above-mentioned and other objects of the present invention, the shock absorber comprises a piston reciprocably disposed in a cylinder, which piston is sized small enough to permit the shock absorber being successfully compacted. The piston defines therein a vortex member with a maximum radius. The vortex chamber communicates with the fluid chamber defined in the shock absorber via vortex passages formed in the piston. The vortex passage extends in the ceiling or bottom of the piston and tangentially opens at the upper and lower plane periphery of the vortex chamber.

By providing the vortex passages in the above-mentioned manner, the radius of the vortex chamber can be maximized in relation to the radius of the piston. This helps to reduce the size of the piston, and, in turn, to compact the shock absorber.

According to one aspect of the invention there is provided a vortex flow shock absorber comprising a hollow cylinder, a piston reciprocably disposed within said hollow cylinder to define therein first and second fluid chambers, said piston including first and second horizontal sections and an annular circumferential section for defining therein a vortex chamber which is in communication with said first and second chambers via first and second fluid passages so that a vortex pattern fluid flow is created when a working fluid flows into said vortex chamber from said first chamber via said first passage, the first passage extending through said first horizontal section of said piston to have an inner end opening on the inner surface of said first horizontal facing said vortex chamber.

In a specific embodiment, the direct-acting shock absorber comprises an outer hollow cylinder having the hollow cylinder coaxially disposed therein to define therebetween a fluid reservoir chamber filled with a working fluid, and a bottom fitting fit to the lower end of the inner cylinder and defining therein a substantially circular vortex chamber communicated to the second fluid chamber of the inner cylinder via vortex passages. The bottom fitting has further defined therein a passage for communication between said vortex chamber and said fluid reservoir chamber.

The present invention will more clearly understood from the detailed description given herebelow and from the accompanying drawings of preferred embodiments of the invention, which, however, should not be taken as limitative to the invention but for elucidation and explanation only.

In the drawings:

Fig. 1 is an explanatory illustration of a vortex chamber showing vortex flow in the vortex chamber;

Fig. 2 is a longitudinal section of a first embodiment of a vortex flow shock absorber of a direct-acting type;

Fig. 3 is an enlarged section of a piston in the shock absorber of Fig. 2;

Fig. 4 is a plan view of the piston of Fig. 3 viewed from the section taken along the line 4—4 of Fig. 3;

Fig. 5 is a plan view of a valve member inserted into the position of Fig. 3;

Fig. 6 is a front elevation view of the valve member of Fig. 5;

Fig. 7 is a transverse section of bottom fitting in the shock absorber of Fig. 2;

Fig. 8 is a plan view of the bottom fitting of Fig. 7 as viewed from the section taken along the line 8—8 of Fig. 7;

Fig. 9 is a plan view of a valve member inserted into the end fitting of Fig. 7;

Fig. 10 is a front elevation view of the valve member of Fig. 9;

Fig. 11 is a longitudinal section of the second embodiment of the shock absorber according to the present invention;

Fig. 12 is an enlarged transverse section of a piston of the shock absorber of Fig. 11;

Fig. 13 is a plan view of the piston of Fig. 12 as viewed in the direction of the arrows 13—13 of Fig. 12;

Fig. 14 is a cross-section of the piston of Fig. 12 taken along line 14—14 of Fig. 12;

Fig. 15 is a section of the piston of Fig. 12 taken along line 15—15 of Fig. 12;

Fig. 16 is an enlarged transverse section of the second embodiment of bottom fitting in the shock absorber of Fig. 11;

Fig. 17 is a plan view of the bottom fitting of Fig. 16 taken along line 17—17 of Fig. 16;

Fig. 18 is a cross-section of the bottom fitting of Fig. 16 taken along line 18—18 of Fig. 16; and

Fig. 19 is a section of the bottom fitting of Fig. 16 taken along line 19—19 of Fig. 16.

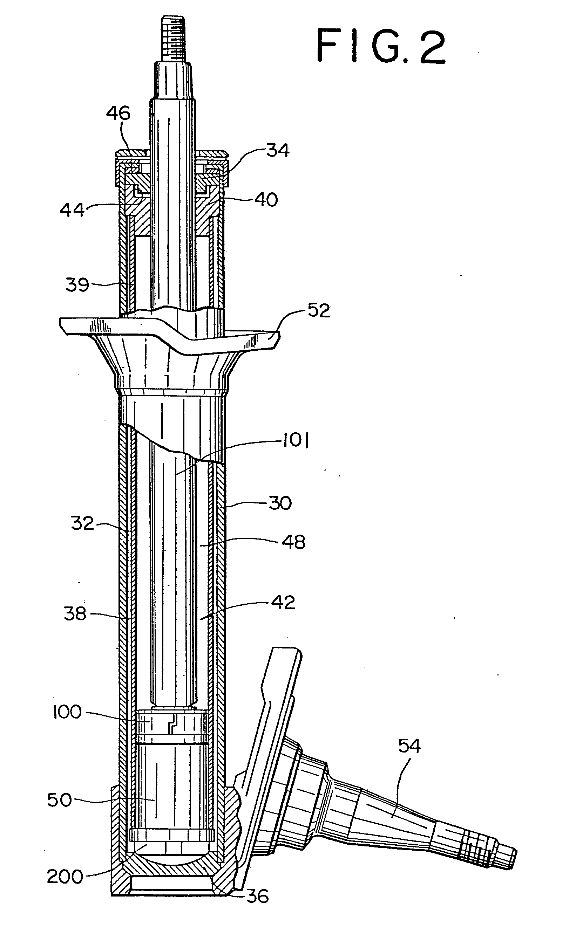

Referring now to Fig. 2, there is illustrated a first embodiment of a direct-acting shock absorber according to the present invention. The shock absorber includes outer and inner cylinders 30 and 32 coaxially arranged with respect to each other. The outer cylinder 30 is closed at both upper and lower ends with an elastic sealer 34 and an end fitting 36. The inner cylinder 32 is disposed within the outer cylinder 30 in spaced apart relationship to define therebetween a fluid reservoir chamber 38. A bottom fitting 200 is attached at the lower end of the inner cylinder 32. The upper end of the inner cylinder 32 is closed with an elastic sealer 40 to define a fluid chamber 42 in the inner cylinder, in which is filled a working fluid. The sealer 40 has a recess 44 on the upper surface, which recess receives a projecting portion downwardly protruding on the lower surface of the sealer 34. Also, the sealer 34 secures a sealing ring 46 between the inner surface of the upper end of the outer cylinder 30.

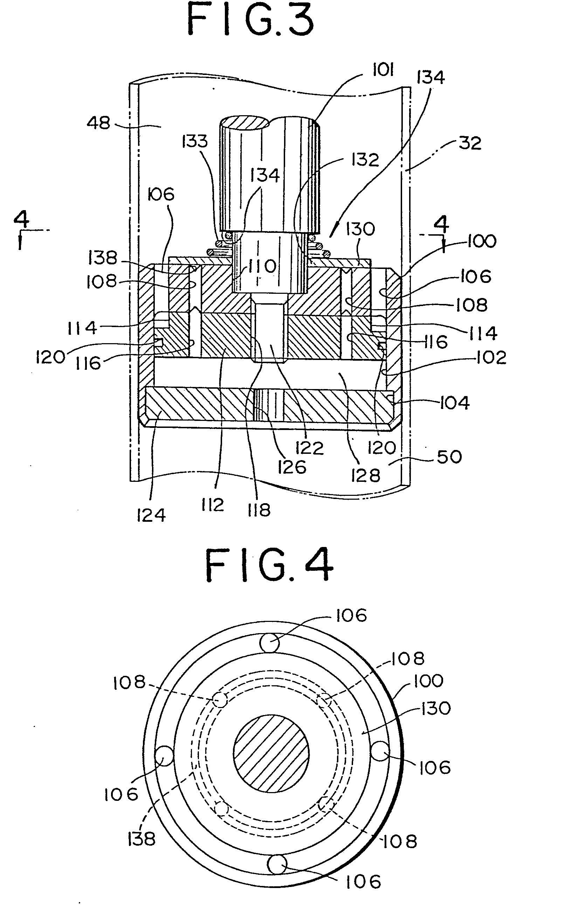

A piston 100 is movably disposed within the fluid chamber 42. The piston 100 is connected to the lower end of a piston rod 101. The piston 100 divides the fluid chamber 42 into upper and lower fluid chambers 48 and 50. As shown in Figs. 3 to 5, the piston 100 is formed with a circular recess 102. The lower end of the piston groove 102 is stepped to define the stepped lower section 104.

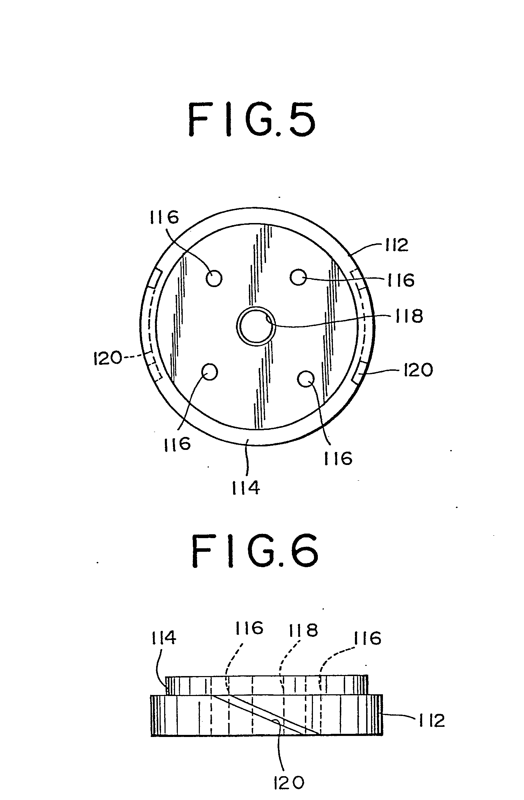

The piston 100 is formed with vertically extending openings 106 adjacent the circumference thereof. The piston 100 is also formed with vertically extending openings 108 remote from the circumference of the piston. The piston 100 is further formed with a central stepped opening 110. A valve member 112 is disposed within the recess 102. As shown in Figs. 5 and 6, the valve member 112 is formed with a cut-out 114 on the upper circumferential edge. The valve member 112 is also formed with vertically extending openings 116. The openings 116 are axially aligned with the openings 108, respectively. The valve member 112 is further formed with a central threaded opening 118.

The valve member 112 formed with a pair of grooves 120 extending on the circumference. The groove 120 opens toward the cut-out 114 at the upper end and opens at the lower end directing tangentially to the circle of the groove 102. The groove 120 defines a vortex passage at the inner periphery of the inner cylinder 32. The threaded opening 118 engages with a threaded end 122 of the piston rod 101.

To the stepped lower section 104, a fitting 124 with a central opening 126 is resiliently secured to define a vortex chamber 128 within the groove 102. The vortex chamber 128 communicates with the upper fluid chamber 48 via the vortex passages 120, the cut-out 114 and the through openings 106. In turn, the vortex chamber 128 communicates with the lower fluid chamber 50 via the through opening 126.

The vortex chamber 128 further communicates with the upper fluid chamber 48 via the through openings 108. The upper end of the through openings 108 are closed by a closure disc 130 having a central opening 132 through which passes the piston rod 101 and which is therefore, movable along the piston rod axis. The closure disc 130 is urged toward the upper end of the through openings 108 with a coil spring 133. The upper end of the spring 133 is seated onto a horizontally stepped face 134 of the piston rod 101 and the lower end thereof is seated onto the closure disc 130. The closure disc 130 and the coil spring 133 constitute a one-way valve 136 for restricting the fluid flow in the direction from the upper fluid chamber 48 to the vortex chamber. Each of the upper ends of the through openings 108 communicates with adjacent ends of the other openings 108 via a substantially V-shaped groove formed on the upper surface of the piston.

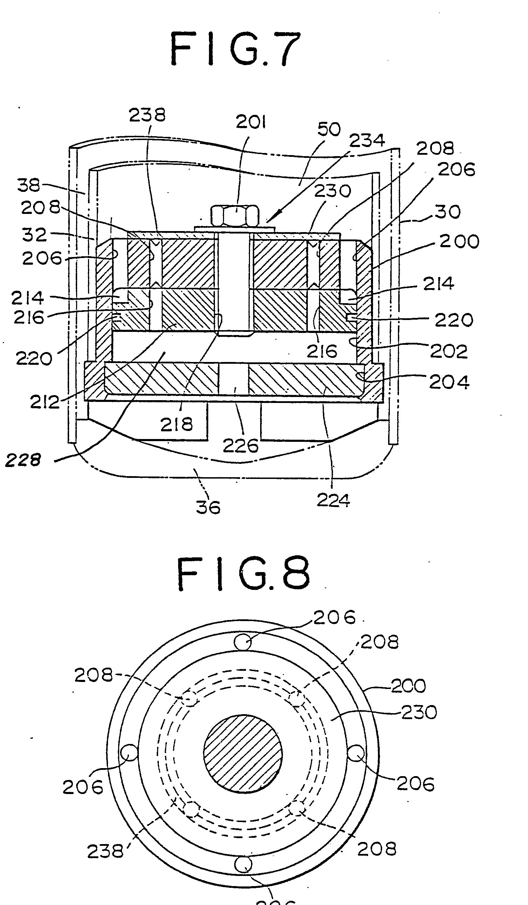

Figs. 8 to 10 show the bottom fitting 200 applied to the shock absorber of the first embodiment, shown in Fig. 2. Generally, the construction of the bottom fitting 200 is the same as that of the foregoing piston 100. Similarly to the foregoing piston 100, the bottom fitting 200 is formed with a circular recess 202. The lower end of the recess 202 is stepped to define the lower stepped section 204.

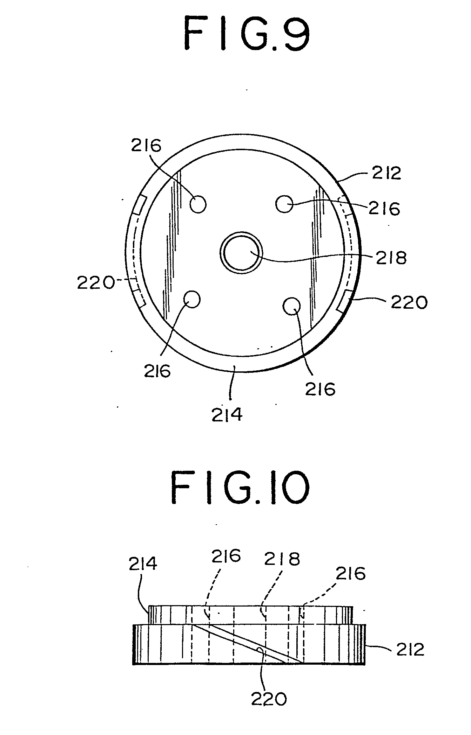

The bottom fitting 200 is formed with vertically extending openings 206 adjacent the circumference thereof. The bottom fitting 200 is also formed with vertically extending openings 208 remote from the circumference of the piston. The bottom fitting 200 is further formed with a central stepped opening 210. A valve member 212 is disposed within the recess 202. As shown in Figs. 9 and 10, the valve member 212 is formed with a cut-out 214 on the upper circumferential edge. The valve member 212 is also formed with vertically extending openings 216. The openings 216 are axially aligned with the openings 208, respectively. The valve member 112 is further formed with a central threaded opening 118.

The valve member 212 formed with a pair of grooves 220 extending on the circumference. The groove 220 opens toward the cut-out 214 at the upper end and opens at the lower end directing tangentially to the circle of the groove 202. The groove 220 defines a vortex passage between the inner periphery of the inner cylinder 32. The threaded opening 118 engages with a threaded end 122 of a fastening bolt 201.

To the stepped lower section 204, a fitting 224 with a central opening 226 is resiliently secured to define a vortex chamber 228 within the groove 202. The vortex chamber 228 communicates with the lower fluid chamber 50 via the vortex passages 220, the cut-out 214 and the through openings 206. In turn, the vortex chamber 228 communicates with the fluid reservoir chamber 38 via the through opening 226.

The vortex chamber 228 further communicates with the lower fluid chamber 50 via the through openings 208. The upper end of the through openings 208 are closed by a closure disc 230 has a central opening 232 through which passes the fastening bolt 201 and which is therefore, elastically movable to open and close the upper end of the through opening 208. The closure disc 230 is formed of an elastic material and is *per se* urged toward the upper end of the through openings 208 with an elastic force serving as the set pressure. Thus, the closure disc 230 constitutes an one-way valve 236 for restricting the fluid flow in the direction from the upper fluid chamber 48 to the vortex chamber.

In the compression stroke, the piston 100 moves downwardly to expand the volume of the upper fluid chamber 48 with reduction of the fluid pressure therein and to compress the volume of the lower fluid chamber 50 with increase of the fluid pressure therein. Due to the fluid pressure difference between the upper and lower fluid chambers 48 and 50, a fluid flow is produced in the direction from the lower fluid chamber 50 to the upper fluid chamber 48. The fluid flows into the vortex chamber 128 via the through opening 126 of the fitting 124. The fluid in the vortex chamber 128 flows through the vortex passages 120, the cut-out 114 and the through openings 106 to the upper fluid chamber 48. At the same time, the closure disc 130 is forced upwardly against a set pressure of the coil spring 132 to open the upper end of the through openings 108 to allow the fluid in the vortex chamber 128 therethrough.

On the other hand, due to increase of the fluid pressure, the fluid in the lower fluid chamber 50 flows into the vortex chamber 228 via the through openings 208, the cut-out 214 and the vortex passages 220. Since the fluid flows in a tangential direction from the vortex passage, a vortex is produced in the vortex chamber 228 to limit the flow amount of the fluid. The fluid in the vortex chamber 228 flows into the fluid reservoir chamber 38. By increasing of the fluid amount, a gas contained in the upper section 39 of the fluid reservoir chamber is reduced in volume with increase in pressure thereof.

In the expansion stroke, the piston 100 moves upwardly to expand the volume of the lower fluid chamber 50 with reduction of the fluid pressure therein and to reduce the volume of the upper fluid chamber 48 with increase of the fluid pressure. Due to the fluid pressure difference between the upper and lower fluid chambers 48 and 50, the fluid flow is produced in the direction from the upper fluid chamber 48 to the lower fluid chamber 50. The fluid flows into the vortex chamber 128 via the vortex passages 120. The fluid in the vortex chamber 128 flows through the through opening 126 to the lower fluid chamber 50.

On the other hand, due to the reduction of the fluid pressure, the fluid in the fluid reservoir chamber 38 flows into the vortex chamber 228 via the through opening 226. The fluid in the vortex chamber 228 flows into the lower fluid chamber 50.

During the fluid flow as set forth, the vortex passages 120 serve as orifices to limit the fluid flow therethrough to produce a resistance against the fluid flow. On the other hand, the vortex in the vortex chamber 228 also produces a resistance against the fluid flowing through the vortex chamber. If the piston stroke is so small or the piston speed is so low that it cannot generate a sufficient resistance against the fluid flowing through the vortex chamber 228, the resistance provided by the orifice effect of the vortex passages 120 works as main factor of an absorbing force against the shock applied to the shock absorber. When the piston stroke becomes large enough or the piston speed is sufficiently increased, the vortex in the vortex chamber 228 provides a sufficient resistance against the fluid flowing through the vortex chamber.

Here, since the fluid pressure in the vortex chamber 128 of the piston 100 is substantially the same as that in the lower fluid chamber, if the fluid pressure in the lower chamber becomes greater than that of the set pressure of the closure disc 130, the closure disc 130 is moved upwardly to allow the fluid flowing therethrough. Thus, the closure disc 130 and the openings 108 serve as relief valve for presenting the shock absorber from producing excessive absorbing force.

As stated, the absorbing force produced in the vortex chamber by the vortex is proportional to the diameter of the vortex chamber. According to the shown embodiment the present invention, since the vortex passages are formed on the circumference of the valve member disposed in the groove of the piston, the diameter of the vortex chamber can be of maximum in spite of the presence of the vortex passages. This, in turn, allows the piston being reduced in diameter to permit the shock absorber reducing the size.

In Fig. 1, the reference numerals 52 and 54 respectively represent a spring seat and a steering knuckle. However, the shown embodiment illustrates these elements for the purpose of showing the specific construction of the shock absorber, it should be appreciated that these are not always necessary to be provided to the shock absorber of the present invention.

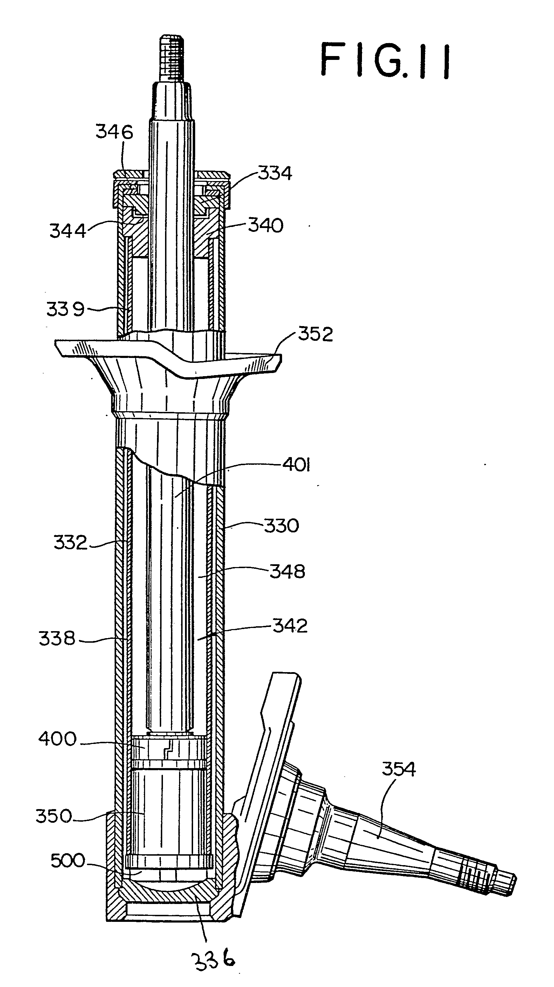

Fig. 11 to 15 show a second embodiment of the direct-acting shock absorber according to the present invention. Likewise to the foregoing first embodiment, the shock absorber includes outer and inner cylinders 330 and 332 coaxially arranged with respect to each other. The outer cylinder 330 is closed at both the upper and lower ends with an elastic sealer 334 and an end fitting 336. The inner cylinder 332 is disposed within the outer cylinder 330 in spaced aparting relationship to define therebetween a fluid reservoir chamber 338. A bottom fitting 500 is attached at the lower end of the inner cylinder 332. The upper end of the inner cylinder 332 is closed with an elastic sealer 340 to define a fluid chamber 342 in the inner cylinder, in which is filled a working fluid. The sealer 340 has a recess 344 on the upper surface, which recess receives a projecting portion downwardly protruding on the lower surface of the sealer 334. Also, the sealer 334 secures a sealing ring 346 between the inner surface of the upper end of the outer cylinder 330.

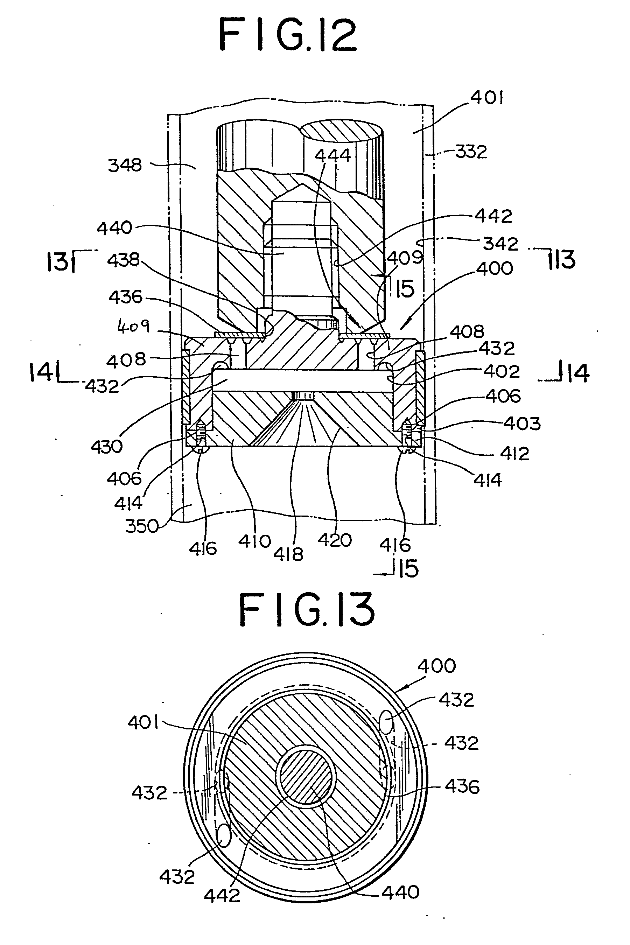

The piston 400 is movably disposed within the fluid chamber 342. The piston 400 is attached onto the lower end of the piston rod 401. The piston 400 divides the fluid chamber 342 into upper and lower chambers 348 and 350. As shown in Figs. 12 to 15, the piston 400 is formed with a circular recess 402. The lower end of the vertical circumference 403 of the piston 400 is formed with a plurality of threaded bores 406 vertically extending from the lower end thereof. The piston 400 is also formed with vertically extending openings 408 in the horizontal part 409 thereof.

A substantially disc-shaped fitting 410 is attached to the lower end of the piston 400. The fitting is provided with a laterally extending flange portion 412. A plurality of through openings 414 are formed in the flange portion 412. The openings 414 are respectively aligned with the threaded bores 406 of the piston to receive screws 416 for securing the fitting 410 onto the piston. The fitting 410 is also formed with a central opening 418 which has a tappered lower section 420.

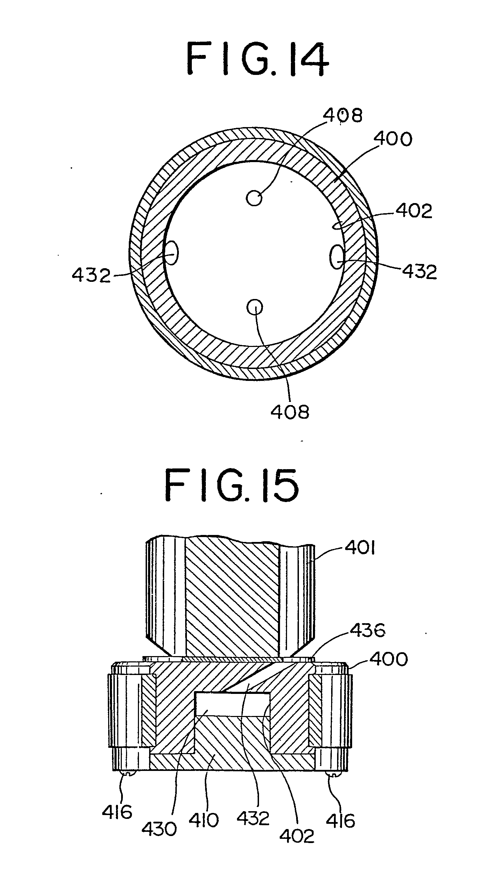

In the assembled position, the piston 400 and the fitting 410 define a vortex chamber 430 therebetween. The vortex chamber 430 communicates with the upper chamber 348 via vortex passages 432 which are formed in the piston 400 and extends tangentially in relation to the circle of the circular recess 402, as shown in Figs. 13 to 15. The vortex chamber 430, in turn, communicates with the lower chamber 350 via the central opening 418 of the fitting 410. Further, the vortex chamber 430 communicates with the upper chamber 348 via the openings 408 of the piston. The opening 408 is closed at the upper end 434 with a resilient disc-shaped plate 436 which has a central opening 438. Through the opening 438, a threaded projection 440 provided to the piston 400 extends upwardly to engage with a threaded bore 442 formed in the piston rod 401. Thus, the circumferential edge of the opening 438 is secured between the upper surface of the piston 400 and the lower end of the piston rod 401. The resilient plate 436 thus fitted constitutes an one-way valve 444 with the vertical opening 408 to permit the fluid flow in the direction from the vortex chamber 430 to the upper chamber 348. Here, the resilient force of the resilient plate 436 serves as a set pressure to which the one-way valve 444 is responsive to open.

Again, as apparent from Figs. 13 to 15, the vortex passages 432 have the outer end opening to the upper plane surface of the piston and the inner end opening to the lower plane surface of the horizontal section 409.

Thus, the vortex passages 432 extend through the horizontal section 409 in vertically tilted position and in a direction tangential to the circle of the circular recess 402.

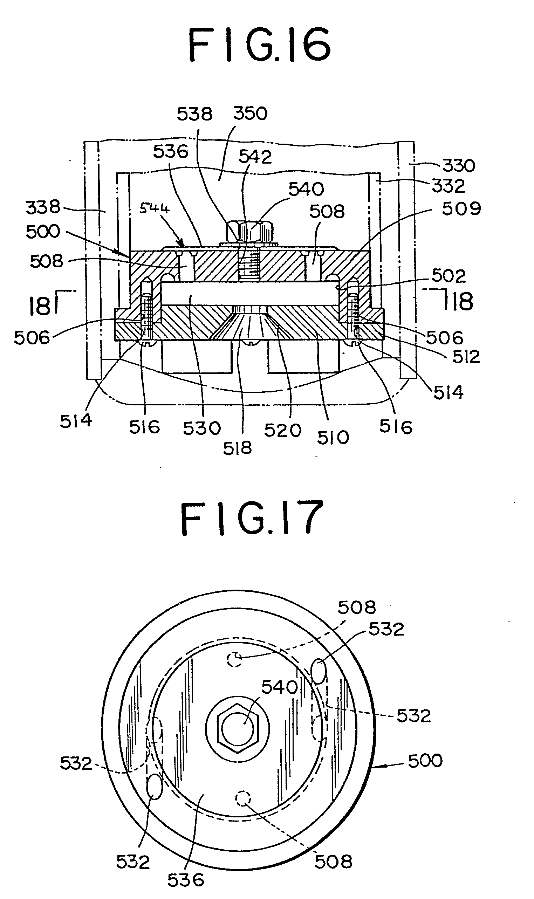

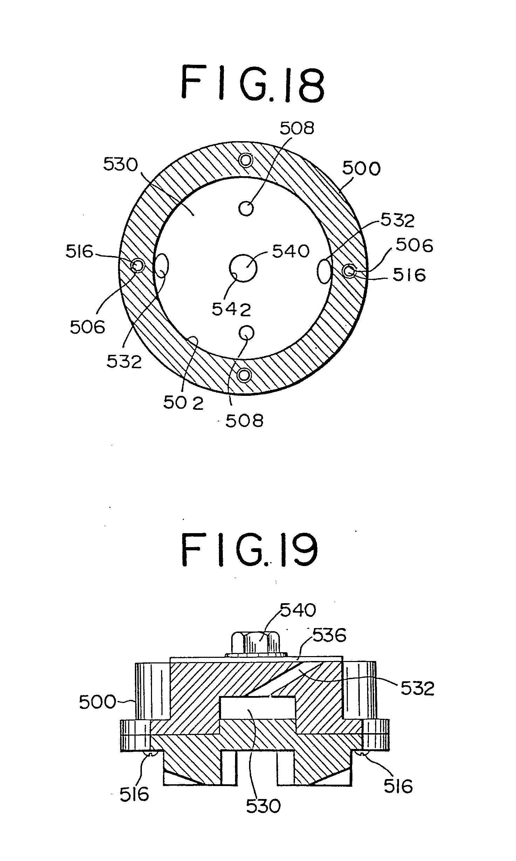

As shown in Figs. 16 to 19, the bottom fitting 500 is formed with a circular recess 502. The lower end of the vertical circumference 503 of the bottom fitting 400 is formed with a plurality of threaded bores 506 vertically extending from the lower end thereof. The bottom fitting 500 is also formed with a vertically extending opening 508 in the horizontal section 509 thereof.

The substantially disc-shaped fitting 510 is attached to the lower end of the bottom fitting 500. The fitting is provided with a laterally extending flange portion 512. A plurality of through openings 514 are formed in the flange portion 512. The openings 514 are respectively aligned with the threaded bores 506 of the bottom fitting 500 to receive screws 516 for securing the fitting 510 onto the piston. The fitting 510 is also formed with a central opening 518 which has a tapered lower section 520.

In the assembled position, the bottom fitting 500 and the fitting 510 define a vortex chamber 530 therebetween. The vortex chamber 530 communicates with the lower chamber 350 via vortex passages 532 which are formed in the bottom fitting 500 and extend tangentially in relation to the circle of the circular recess 502, as shown in Figs. 16 to 19. The vortex chamber 530, in turn, communicates with the fluid reservoir chamber 338 via the central opening 518 of the fitting 510. Further, the vortex chamber 530 communicates with the lower chamber 350 via the openings 508 of the piston. The opening 508 is closed the upper end 534 with a resilient disc-shaped plate 536 which has a central opening 538. Through the opening 538, a fastening bolt 540 extends downwardly to engage with a threaded bore 542 formed in the bottom fitting 500. Thus, the circumferential edge of the openings 538 is secured on the upper surface of the bottom fitting 500. The resilient plate 536 thus fitted constitutes an one-way valve 544 with the vertical opening 508 to permit the fluid flow in the direction from the vortex chamber 530 to the lower chamber 350. Here, the resilient force of the resilient plate 536 serves as a set pressure to which the one-way valve 444 is responsive to open.

In the compression stroke, the piston 400 moves downwardly to expand the volume of the upper fluid chamber 348 with reduction of the fluid pressure therein and to compress the volume of the lower fluid chamber 350 with increase of the fluid pressure. Due to the fluid pressure difference between the upper and lower fluid chambers 348 and 350, the fluid flow is produced in the direction from the lower fluid chamber 350 to the upper fluid chamber 348. The fluid flows into the vortex chamber 430 via the through opening 418 of the fitting 410.

The fluid in the vortex chamber 430 flows through the vortex passages 432 and the through openings 408 to the upper fluid chamber 348. At the same time, the closure disc 436 is forced upwardly against a set pressure to open the upper end of the through openings 408 to allow the fluid in the vortex chamber 430 therethrough.

On the other hand, due to increasing of the fluid pressure, the fluid in the lower fluid chamber 350 flows into the vortex chamber 530 of the bottom fitting 500 via the vortex passages 532. Since the fluid is flowed in a tangential direction from the vortex passage, a vortex is produced in the vortex chamber 530 to limit the flow amount of the fluid. The fluid in the vortex chamber 530 flows into the fluid reservoir chamber 338. By increasing of the fluid amount, a gas contained in the upper section 339 of the fluid reservoir chamber is reduced in volume with increase in the pressure thereof.

In the expansion stroke, the fluid flow in the opposite direction is generated. During this piston stroke, the piston produces the absorbing force by creating vortex flow in the vortex chamber thereof and the bottom fitting produces the absorbing force by orifice effect of the through openings, as set forth in the foregoing first embodiment.

During the fluid flow as set forth, the vortex passages 432 serves as orifice to limit the fluid flow therethrough to produce a resistance against the fluid flow. On the other hand, the vortex in the vortex chamber 530 also produces the resistance against the fluid flowing through the vortex chamber. If the piston stroke is so small or the piston speed is so low that it cannot generate a sufficient resistance against the fluid flowing through the vortex chamber 530, the resistance provided by the orifice effect of the vortex passages 432 works as main factor of an absorbing force against the shock applied to the shock absorber. When the piston stroke becomes large enough or the piston speed is sufficiently increased, the vortex in the vortex chamber 530 provides a sufficient resistance against the fluid flowing through the vortex chamber.

Here, since the fluid pressure in the vortex chamber 430 of the piston 400 is substantially the same as that in the lower fluid chamber, if the fluid pressure in the lower chamber becomes greater than that of the set pressure of the closure disc, the closure disc 436 is moved upwardly to allow the fluid flowing therethrough. Thus, the closure disc 436 and the openings 408 serve as a relief valve for preventing the shock absorber from producing excessive absorbing force.

As stated, the absorbing force produced in the vortex chamber by the vortex is proportional to the diameter of the vortex chamber. According to the shown embodiment the present invention, since the vortex passages are formed on the circumference of the valve member disposed in the groove of the piston, the diameter of the vortex chamber can be of maximum in spite of the presence of the vortex passages. This, in turn, allow the piston being reduced in diameter to permit the shock absorber reducing the size.

**Claims**

1. A vortex flow shock absorber comprising a hollow cylinder (32; 332), a piston (100; 400) reciprocably disposed within said hollow cylinder to define therein first and second fluid chambers (48, 50; 348, 350), said piston (100; 400) including first and second horizontal sections and an annular circumferential section for defining therein a vortex chamber (128; 430) which is in communication with said first and second chambers (48, 50; 348, 350) via first and second fluid passages (106, 114; 432, 126; 418) so that a vortex pattern fluid flow is created when a working fluid flows into said vortex chamber (128, 430) from said first chamber via said first passage, characterized in that said first passage (106, 114; 432) extends through said first horizontal section of said piston (100; 400) to have an inner end opening on the inner surface of said first horizontal section facing said vortex chamber.

2. A vortex flow shock absorber as set forth in claim 1, characterized in that said horizontal section of said piston extending perpendicularly to the axis of said piston and in that said first passage (106, 114; 432) has an outer end opening on the outer surface of said horizontal section.

3. A vortex flow shock absorber as set forth in claim 1 or 2, characterized in that a flow guide member (112) is disposed within said vortex chamber (100) in opposing relationship with said inner end of said first passage (106), said flow guide member creating vortex pattern fluid flow in said vortex chamber (118) when the working fluid is introduced into said vortex chamber from said first chamber (48) via said first passage.

4. A vortex flow shock absorber as set forth in claim 3, characterized in that said flow guide member (112) defines a guide passage (114, 120) along which the working fluid introduced into said vortex chamber (100) from said first chamber (48) via said first passage (106) flows, said guide passage (114, 120) having an inner end directed tangentially with respect to the circle of the vortex chamber (128).

5. A vortex flow shock absorber as set forth in claim 4, characterized in that said flow guide member (112) is attached to the inner surface of said first horizontal section of said piston for defining said guide passage (114, 120) between said inner surface of said first horizontal section and the inner surface of the guide member (112) adjacent the circumference of said vortex chamber.

6. A vortex flow shock absorber as set forth in any one of claims 1 to 5, characterized in that a third fluid passage (108, 116; 408) is defined in said piston (100; 400) for communication between said first chamber (48, 348) and said vortex chamber (128; 430), which third fluid passage (108, 116; 408) is normally closed with an elastic closure member (130; 436) which is responsive to said fluid pressure in said vortex chamber (128; 430) to open when the fluid pressure in said vortex chamber becomes larger than a given pressure.

7. A vortex flow shock absorber as set forth in any of the above claims, comprising an outer hollow cylinder (30, 330) having the hollow cylinder (32, 332) coaxially disposed therein to define therebetween a fluid reservoir chamber (38; 338) filled with a working fluid, characterized by a bottom fitting (200; 500) fit to the lower end of the inner cylinder (32, 332) and defining therein a substantially circular vortex chamber (228, 330).

8. A vortex flow shock absorber as set forth in claim 7, characterized in that a fourth passage (226; 518) is defined in said bottom fitting (200, 500) for communication between said vortex chamber (228, 530) and said fluid reservoir chamber (38, 338).

## Patentansprüche

1. Wirbelstrom-Stoßdämpfer mit einem hohlen Zylinder (32, 332), einem hin- und hergehend in dem Zylinder beweglichen Kolben (100; 400) zur Bildung erster und zweiter Fluidkammern (48, 50; 348, 350) in dem Kolben, welcher Kolben (100; 400) erste und zweite waagerechte Abschnitte und einen ringförmigen Umfangs-Abschnitt zur Bildung einer Wirbelkammer (128, 430) umfaßt, die mit der ersten und zweiten . Kammer (48, 50; 348, 350) über erste und zweite Fluidkanäle (106, 114; 432, 126; 418) derart verbunden ist, daß ein Wirbelstrom erzeugt wird, wenn ein Arbeitsfluid in die Wirbelkammer (128, 430) von der ersten Kammer durch den ersten Fluidkanal eintritt, dadurch gekennzeichnet, daß der erste Kanal (106, 114; 432) durch den ersten waagerechten Abschnitt des Kolbens (100; 400) derart verläuft, daß ein inneres Ende auf der inneren Oberfläche des ersten waagerechten Abschnitts gegenüber der Wirbelkammer austritt.

2. Wirbelstrom-Stoßdämpfer nach Anspruch 1, dadurch gekennzeichnet, daß der waagerechte Abschnitt des Kolbens senkrecht zu der Achse des Kolbens gerichtet ist und daß der erste Kanal (106, 114; 432) ein äußeres Ende aufweist, das auf der äußeren Oberfläche des waagerechten Abschnitts austritt.

3. Wirbelstrom-Stoßdämpfer nach Anspruch 1 oder 2, dadurch gekennzeichnet, daß ein Strömungs-Führungsteil (112) in der Wirbelkammer (100) gegenüber dem inneren Ende des ersten Kanals (106) angeordnet ist, das eine wirbelförmige Strömung in der Wirbelkammer (118) erzeugt, wenn das Arbeitsfluid in die Wirbelkammer aus der ersten Kammer (48) durch den ersten Kanal eintritt.

4. Wirbelstrom-Stoßdämpfer nach Anspruch 3, dadurch gekennzeichnet, daß das Strömungs-Führungsteil (112) einen Führungskanal (114, 120) bildet, durch den das Arbeitsfluid, das in die Wirbelkammer (100) aus der ersten Kammer (48) durch den ersten Kanal (106) eintritt, geführt wird, welcher Führungskanal (114, 120) ein inneres Ende aufweist, das tangential in bezug auf den Kreis der Wirbelkammer (128) gerichtet ist.

5. Wirbelstrom-Stoßdämpfer nach Anspruch 4, dadurch gekennzeichnet, daß das Strömungs-Führungsteil (112) an der inneren Oberfläche des ersten waagerechten Abschnitts des Kolbens angebracht ist und den Führungskanal (114, 120) zwischen der inneren Oberfläche des ersten waagerechten Abschnitts und der inneren Oberfläche des Führungsteils (112) angrenzend an den Umfang der Wirbelkammer bildet.

6. Wirbelstrom-Stoßdämpfer nach einem der Ansprüche 1 bis 5, dadurch gekennzeichnet, daß ein dritter Fluidkanal (108, 116; 408) in dem Kolben (100; 400) zur Verbindung der ersten Kammer (48, 348) mit der Wirbelkammer (128; 430) gebildet ist, welcher dritte Fluidkanal (108, 116; 408) normalerweise durch ein elastisches Verschlußteil (130; 436) verschlossen ist, welches auf den Fluiddruck in der Wirbelkammer (128; 430) anspricht und öffnet, wenn dieser einen vorgegebenen Druck überschreitet.

7. Wirbelstrom-Stoßdämpfer nach einem der vorhergehenden Ansprüche, mit einem äußeren hohlen Zylinder (30, 33), der koaxial zu dem hohlen Zylinder (32, 332) angeordnet ist und mit diesem eine mit Arbeitsfluid gefüllte Fluidbehälterkammer (38; 338) bildet, gekennzeichnet durch ein Bodenstück (200, 500) am unteren Ende des inneren Zylinders (32, 332), in dem eine im wesentlichen kreisförmige Wirbelkammer (228, 330) gebildet ist.

8. Wirbelstrom-Stoßdämpfer nach Anspruch 7, dadurch gekennzeichnet, daß ein vierter Kanal (226; 518) in dem Bodenstück (200, 500) gebildet ist, der eine Verbindung zwischen der Wirbelkammer (228, 530) und der Fluidbehälterkammer (38, 338) herstellt.

## Revendications

1. Amortisseur de choc à écoulement tourbillonnaire comprenant un cylinder creux (32; 332), un piston (100; 400) disposé de manière alternative dans ledit cylindre creux pour y définir des première et seconde chambres de fluide (48, 50; 348, 350), ledit piston (100; 400) comprenant des première et seconde sections horizontales et une section circonférentielle annulaire pour y définir une chambre de tourbillons (128; 430) en communication avec lesdites première et seconde chambres (48, 50; 348, 350) par des premier et second passages de fluide (106, 114; 432, 126; 418) de façon à créer un écoulement du fluide en motif tourbillonnaire lorsqu'un fluide de travail s'écoule dans ladite chambre de tourbillons (128, 430) de ladite première chambre par ledit premier passage, caractérisé en ce que ledit premier passage (106, 114; 432) traverse ladite première section horizontale dudit piston (100; 400) pour avoir une extrémité interne débouchant sur la surface interne de ladite première section horizontale faisant face à ladite chambre de tourbillons.

2. Amortisseur de choc à écoulement tourbillonnaire selon la revendication 1, caractérisé en ce que ladite section horizontale dudit piston s'étend perpendiculairement à l'axe dudit piston et en ce que ledit premier passage (106, 114; 432) a une extrémité externe débouchant sur la surface externe de ladite section horizontale.

3. Amortisseur de choc à écoulement tourbillonnaire selon la revendication 1 ou 2, caractérisé en ce qu'un organe de guidage d'écoulement (112) est disposé dans ladite chambre de tourbillons (100) face à ladite extrémité interne dudit premier passage (106), ledit organe de guidage d'écoulement créant un écoulement du fluide selon un motif tourbillonnaire dans ladite chambre de tourbillons (118) quand le fluide de travail est introduit dans ladite chambre de tourbillons à partir de ladite première chambre (48) par ledit premier passage.

4. Amortisseur de choc à écoulement tourbillonnaire selon la revendication 3, caractérisé en ce que ledit organe de guide d'écoulement (112) définit un passage de guidage (114, 120) le long duquel le fluide de travail introduit dans ladite chambre de tourbillons (100) de ladite première chambre (48) par ledit premier passage (106) s'écoule, ledit passage de guidage (114, 120) ayant une extrémité interne dirigée tangentiellement par rapport au cercle de la chambre de tourbillons (128).

5. Amortisseur de choc à écoulement tourbillonnaire selon la revendication 4, caractérisé en ce que ledit organe de guidage d'écoulement (112) est attaché à la surface interne de ladite première section horizontale dudit piston pour définir ledit passage de guidage (114, 120) entre ladite surface interne de ladite première section horizontale et la surface interne de l'organe de guidage (112) à proximité de la circonférence de ladite chambre de tourbillons.

6. Amortisseur de choc à écoulement tourbillonnaire selon l'une quelconque des revendications 1 à 5, caractérisé en ce qu'un troisième passage de fluide (108, 116; 408) est défini dans ledit piston (100; 400) pour une communication entre ladite première chambre (48, 348) et ladite chambre de tourbillons (128; 430), lequel troisième passage de fluide (108, 116; 408) est normalement fermé par un organe élastique de fermeture (130; 436) qui répond à ladite pression du fluide dans ladite chambre de tourbillons (128; 130) pour s'ouvrir lorsque la pression du fluide dans ladite chambre de tourbillons dépasse une pression donnée.

7. Amortisseur de choc à écoulement tourbillonnaire selon l'une quelconque des revendications ci-dessus, comprenant un cylindre externe creux (30, 330) où le cylindre creux (32, 332) est disposé coaxialement pour définir entre eux une chambre formant réservoir de fluide (38, 338) remplie d'un fluide de travail, caractérisé par un raccord inférieur (200; 500) fixé à l'extrémité inférieure du cylindre interne (32; 332) et y définissant une chambre sensiblement circulaire de tourbillons (228, 330).

8. Amortisseur de choc à écoulement tourbillonnaire selon la revendication 7, caractérisé en ce qu'un quatrième passage (226; 518) est défini dans ledit raccord inférieur (200, 500) pour une communication entre ladite chambre de tourbillons (228, 530) et ladite chambre formant réservoir de fluide (38, 338).

# F I G. I

# FIG.2

# F I G. 3

# F I G. 4

# FIG.5

# FIG.6

# FIG.7

# FIG.8

# F I G.9

# F I G.10

FIG.11

# FIG.12

# FIG.13

# FIG. 14

# FIG. 15

# F I G.16

# F I G.17

# FIG.18

# FIG.19